# EUROPEAN PATENT APPLICATION

(11) **EP 4 667 280 A1**
(43) Date of publication of application: **24.12.2025**
(21) Application number: 24755945.3
(22) Date of filing: 27.01.2024
(51) Int. Cl.: B60L 53/60, H02J 7/02

(54) **VEHICLE-MOUNTED CHARGING CONTROL METHOD AND APPARATUS, VEHICLE, SYSTEM, AND STORAGE MEDIUM**

(30) Priority: 17.02.2023 CN 202310132831
(71) Applicant: Byd Company Limited, P.R. China, Guangdong 518118 (CN)
(72) Inventor: DING, Gengxin, Shenzhen, Guangdong 518118 (CN); LIU, Chenming, Shenzhen, Guangdong 518118 (CN); YANG, Keyi, Shenzhen, Guangdong 518118 (CN); LI, Dongdong, Shenzhen, Guangdong 518118 (CN); XIE, Zhineng, Shenzhen, Guangdong 518118 (CN)
(74) Representative: Mathys & Squire
(86) International application number: PCT/CN2024/074349
(87) International publication number: WO 2024/169570

(57) **Abstract**

A vehicle-mounted charging control method and apparatus, a vehicle, a system, and a storage medium are provided. The method includes: when a battery management system of a target vehicle is in a high-voltage power-on completed state, determining whether a charging socket of a vehicle-mounted charger of the target vehicle is connected to a DC charging pile; and if the charging socket of the vehicle-mounted charger of the target vehicle is connected to the DC charging pile, controlling the vehicle-mounted charger to enter a DC charging mode to quickly charge a battery pack of the target vehicle. The apparatus includes a determining unit and a processing unit. The charging system includes an electric vehicle and a charging pile. The electric vehicle includes a vehicle body, a charging control module, and an energy storage module.

## Description

### CROSS-REFERENCE TO RELATED APPLICATIONS

The present disclosure claims priority to Chinese Patent Application No. 202310132831.3, filed with the China National Intellectual Property Administration on February 17, 2023, entitled "VEHICLE-MOUNTED CHARGING CONTROL METHOD AND APPARATUS, VEHICLE, SYSTEM, AND STORAGE MEDIUM", which is incorporated herein by reference in its entirety.

### FIELD

The present disclosure relates to the technical field of electric vehicles, and in particular, to a vehicle-mounted charging control method and apparatus, a vehicle, a system, and a storage medium.

### BACKGROUND

In recent years, electric vehicles have increasingly become a new direction for the development of automotive technology. The energy of electric vehicles comes from the electric energy carried by the battery pack, and the battery pack needs to be charged. In the process of charging the battery pack, vehicle-mounted alternating-current (AC) charging is a relatively important part. At present, in the process of charging the battery pack, the user needs to discharge the battery pack first. After the discharge is completed, charging can only be performed when it is recognized that the battery management system of the electric vehicle is in a high-voltage power off state. When charging, it is necessary to switch from low-voltage power-on to high-voltage power-on before completing the charging of the battery pack of the electric vehicle, which leads to a slow charging speed of the battery pack of the electric vehicle. Therefore, how to improve the charging speed of the battery pack of electric vehicles has become an urgent problem to be solved.

### SUMMARY

The present disclosure provides a vehicle-mounted charging control method and apparatus, a vehicle, a system, and a storage medium, which can improve the charging speed of a battery pack of a target vehicle.

According to a first aspect, the present disclosure provides a vehicle-mounted charging control method, and the method includes:
when a battery management system of a target vehicle is in a high-voltage power-on state, it is determined whether a charging socket of a vehicle-mounted charger of the target vehicle is connected to a direct-current (DC) charging pile; and
if the charging socket of the vehicle-mounted charger of the target vehicle is connected to the DC charging pile, the vehicle-mounted charger is controlled to enter a DC charging mode to fast charge the battery pack of the target vehicle.

In an optional embodiment, the method further includes:
when the battery management system of the target vehicle is in a low-voltage wake-up state, if a high-voltage power-on request from a vehicle control unit of the target vehicle is received, a pre-charging high-voltage power-on operation is performed;
after the pre-charging high-voltage power-on operation is completed, the high-voltage power-on is performed; and
if the high-voltage power-on is completed within a first preset time period, it is determined that the battery management system of the target vehicle is in a high-voltage power-on state.

In an optional embodiment, when the battery management system of the target vehicle is in the low-voltage wake-up state, if the battery management system does not receive the high-voltage power-on request from the vehicle control unit of the target vehicle, the battery management system is controlled to enter a low-voltage power-on standby state.

In an optional embodiment, before the battery management system of the target vehicle performs the pre-charging high-voltage power-on operation, the method further includes:
it is determined that an action fault prohibiting the battery management system from controlling the closing of the high-voltage contactor is not present in the battery management system.

In an optional embodiment, the method for determining that the battery management system of the target vehicle is in the high-voltage power-on state includes:
when the battery management system of the target vehicle is in a wake-up state, a voltage of a high-voltage connection port in the battery management system of the target vehicle is acquired; and
if a difference between the voltage of the high-voltage connection port and the voltage of the battery pack of the target vehicle is less than a preset threshold, it is determined that the battery management system of the target vehicle is in the high-voltage power-on state.

In an optional embodiment, that it is determined whether a charging socket of a vehicle-mounted charger of the target vehicle is connected to a DC charging pile includes:
it is determined whether a CC2 signal is detected, wherein the CC2 signal is a connection signal from the DC charging pile, and the CC2 signal is configured to indicate that the charging socket of the vehicle-mounted charger of the target vehicle is connected to a fast charging gun of the DC charging pile.

In an optional embodiment, the method further includes:
when the charging socket of the vehicle-mounted charger of the target vehicle is not connected to the DC charging pile, if it is determined that the charging socket of the vehicle-mounted charger of the target vehicle is connected to a charging gun of an AC charging pile within a second preset time period, the vehicle-mounted charger of the target vehicle is controlled to enter an AC charging mode.

In an optional embodiment, the second preset time period is 30 seconds.

In an optional embodiment, the method further includes:
after the vehicle-mounted charger enters the AC charging mode, if a notification signal is received within a third preset time period, a battery cell is processed according to a temperature of the battery cell in the target vehicle to keep the temperature of the battery cell within a preset range; the notification signal is configured to indicate the processing of the battery cell; and
a permitted charging current and a permitted charging power are sent to the vehicle control unit of the target vehicle.

In an optional embodiment, the third preset time period is 30 seconds.

In an optional embodiment, the notification signal includes a pulse width modulation (PWM) wave signal with a preset duty cycle.

In an optional embodiment, the preset duty cycle is in a range of 5% to 95%.

In an optional embodiment, that a battery cell is processed according to the temperature of the battery cell in the target vehicle includes:
if a maximum temperature of the battery cell in the target vehicle is greater than a preset first temperature and a minimum temperature of the battery cell is greater than or equal to a preset second temperature, a cooling process is performed on the battery cell; and
if the maximum temperature of the battery cell in the target vehicle is less than or equal to the first temperature and the minimum temperature of the battery cell is less than the second temperature, a heating process is performed on the battery cell.

In an optional embodiment, the preset range is greater than or equal to the second temperature and less than or equal to the first temperature.

In an optional embodiment, the method further includes:
if the maximum temperature of the battery cell in the target vehicle is greater than the first temperature and the minimum temperature is less than the second temperature, notification information is sent to the vehicle control unit, and the notification information is configured to indicate that the temperature difference of the battery cell is greater than a preset temperature difference value.

According to a second aspect, the present disclosure provides a vehicle-mounted charging control apparatus, and the apparatus includes:
a determining unit configured to determine whether a charging socket of a vehicle-mounted charger of a target vehicle is connected to a DC charging pile when a battery management system of the target vehicle is in a high-voltage power-on state; and
a processing unit configured to control the vehicle-mounted charger to enter a DC charging mode to fast charge a battery pack of the target vehicle if the charging socket of the vehicle-mounted charger of the target vehicle is connected to the DC charging pile.

Optional embodiments and beneficial effects of the vehicle-mounted charging control apparatus may refer to the relevant contents of the first aspect, and will not be described in detail here.

According to a third aspect, the present disclosure provides an electric vehicle. The electric vehicle includes a vehicle body, a charging control module, and an energy storage module. The energy storage module is configured to provide electric energy for the electric vehicle body, and the charging control module controls the charging and/or discharging of the energy storage module by the method provided in the first aspect.

According to a fourth aspect, the present disclosure provides a charging system. The charging system includes an electric vehicle and a charging pile, and the electric vehicle obtains electric energy from the charging pile by the method provided in the first aspect.

According to a fifth aspect, the present disclosure provides a computer-readable storage medium, storing a computer program which, when executed by a processor, implements the vehicle-mounted charging control method provided in the present disclosure.

In the embodiment of the present disclosure, when the Battery Management System (BMS) of the target vehicle is in the high-voltage power-on state, it is not necessary for the user to discharge the battery pack first, and it is not necessary to switch from low-voltage power-on to high-voltage power-on during charging before completing the charging of the battery pack of the electric vehicle, but the user can directly determine whether the charging socket of the vehicle-mounted charger of the target vehicle is connected to the DC charging pile. When the charging socket of the vehicle-mounted charger of the target vehicle is connected to the DC charging pile, the vehicle-mounted charger is controlled to enter the DC charging mode to fast charge the battery pack of the target vehicle, thereby improving the charging speed of the battery pack of the target vehicle.

### BRIEF DESCRIPTION OF THE DRAWINGS

The accompanying drawings are incorporated into and form a part of the description, illustrate embodiments consistent with the present disclosure and serve to explain the principles of the present disclosure together with the description. In order to more clearly explain the technical solutions of the embodiments of the present disclosure, the drawings that need to be used in the description of the embodiments will be briefly introduced below, and it is obvious that other drawings can be obtained from these drawings for a person skilled in the art without involving an inventive effort.
FIG. 1 is a schematic diagram of a charging interface according to an embodiment of the present disclosure.
FIG. 2 is a schematic flow diagram of a vehicle-mounted charging control method according to an embodiment of the present disclosure.
FIG. 3 is a schematic flow diagram of another vehicle-mounted charging control method according to an embodiment of the present disclosure.
FIG. 4 is a schematic flow diagram of another vehicle-mounted charging control method according to the embodiment of the present disclosure.
FIG. 5 is a schematic diagram of a vehicle-mounted charging control apparatus according to an embodiment of the present disclosure.
FIG. 6 is a schematic structural diagram of an electric vehicle according to an embodiment of the present disclosure.
FIG. 7 is a schematic structural diagram of a charging system according to an embodiment of the present disclosure.

### DETAILED DESCRIPTION

The embodiments of the present disclosure are described below in detail. Examples of the embodiments are shown in the accompanying drawings. When the following description relates to the drawings, unless otherwise indicated, same or similar reference signs in the different accompanying drawings indicate same or similar elements. The embodiments described in the following exemplary embodiments do not represent all embodiments consistent with the present disclosure. Rather, they are merely examples of apparatuses and methods consistent with some aspects of the present disclosure as described in the appended claims.

It should be noted that, herein, the terms "include," " including," or any other variation thereof are intended to encompass a non-exclusive inclusion such that a process, method, article, or apparatus that includes a series of elements includes not only those elements, but also other elements that are not explicitly listed, or elements inherent to such a process, method, article, or apparatus. Without further limitation, an element defined by the sentence "including a..." does not exclude the presence of another identical element in a process, method, article, or apparatus including the element. In addition, components, features, and elements with the same names in different embodiments of the present disclosure may have the same meaning or different meanings, and the specific meanings thereof need to be determined by their interpretation in the specific embodiments or further combined with the context in the specific embodiments.

It will be understood that although the terms first, second, third, etc. may be employed herein to describe various information, such information should not be limited to these terms. These terms are only used to distinguish the same type of information from each other. For example, the first information may also be referred to as the second information, and similarly, the second information may also be referred to as the first information without departing from the scope herein. Depending on the context, the word "if" as used herein may be interpreted as "at" or "when" or "in response to determining". Furthermore, as used herein, the singular forms "a," "an," and "the" are intended to include the plural forms as well, unless the context dictates to the contrary. It will be further understood that the terms "include," and "including," indicate the presence of the described features, steps, operations, elements, components, items, species, and/or groups, but do not exclude the presence, occurrence, or addition of one or more other features, steps, operations, elements, components, items, species, and/or groups. As used herein, the terms "or," "and/or," "including at least one of the following," and the like may be construed as inclusive, or mean any one or any combination. For example, "including at least one of the following: A, B, C" means "any one of the following: A; B; C; A and B; A and C; B and C; A and B and C", and as another example, "A, B or C" or "A, B and/or C" means "any one of the following: A; B; C; A and B; A and C; B and C; A and B and C". An exception to this definition occurs only if a combination of elements, functions, steps, or operations is inherently mutually exclusive in some manner.

It will be understood that although the steps in the flowcharts in the embodiments of the present disclosure are sequentially displayed as indicated by the arrows, these steps are not necessarily sequentially executed in the order indicated by the arrows. Unless explicitly stated herein, the execution of these steps is not strictly limited in order, and may be executed in other orders. Furthermore, at least some of the steps in the figure may include a plurality of sub-steps or stages, and these sub-steps or stages are not necessarily executed at the same time, but may be executed at different times, and the order of execution thereof is not necessarily sequential, but may be executed cyclically or alternately with at least some of other steps or sub-steps or stages of other steps.

Depending on the context, the words "if" as used herein may be interpreted as "at" or "when" or "in response to determining" or "in response to detecting". Similarly, depending on the context, the phrases "if determined" or "if detected (a stated condition or event)" may be interpreted as "when determined" or "in response to determining" or "when detected (a stated condition or event)" or "in response to detecting (a stated condition or event)".

It should be noted that, in the present disclosure, step codes such as S201 and S202 are adopted for the purpose of describing the corresponding contents more clearly and briefly, and do not constitute a substantial limitation in order. In specific implementation, a person skilled in the art may perform S408b first and then S407a, may perform S409b first and then S408a, may perform S409b first and then S407b, etc., but these should be within the scope of protection of the present disclosure.

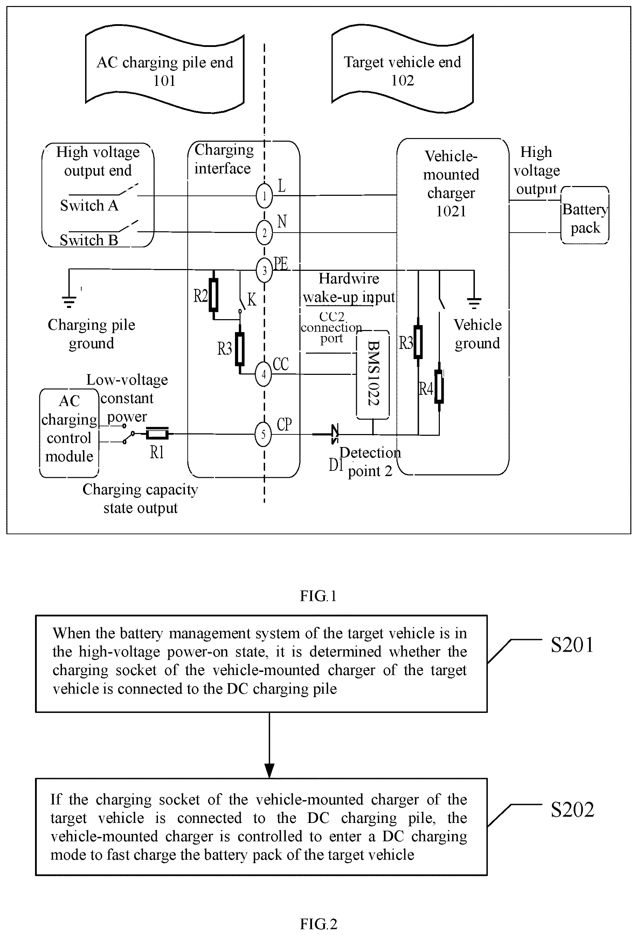

Referring to FIG. 1, FIG. 1 is a schematic diagram of a charging interface according to an embodiment of the present disclosure. As shown in FIG. 1, an AC charging pile end 101 is connected to a vehicle-mounted charger 1021 of a target vehicle end 102 through five charging interfaces. L is a live wire; N is a neutral wire; PE is a ground wire, or a protecting earthing; a CP signal is configured for a battery management system 1022 of the target vehicle end 102 to determine whether a notification signal is received, the notification signal is configured to indicate the processing of the battery cell to keep the temperature of the battery cell within a preset range; a CC signal is configured for the battery management system 1022 of the target vehicle end 102 to determine whether the charging gun in the AC charging pile end 101 is well connected to the charging socket of the vehicle-mounted charger 1021 of the target vehicle end 102; a CC2 connection port is configured for the battery management system 1022 of the target vehicle end 102 to determine whether the charging gun of a DC charging pile is well connected to the vehicle-mounted charger 1021 of the target vehicle end 102; and a hardwire wake-up input port is configured for the battery management system 1022 to receive a high level or a low level from an external device, to cause the battery management system 1022 to be in a wake-up state.

After the AC charging pile end 101 and the target vehicle end 102 are connected through the PE wire, the signal interaction between the AC charging pile end 101 and the target vehicle end 102 can be realized.

Resistors of different types of resistance values are placed in the charging gun, after these resistors are matched with the circuit in the battery management system 1022 of the target vehicle end 102, the battery management system 1022 can obtain a confirmation message. Optionally, the confirmation message includes a first confirmation message and a second confirmation message, the first confirmation message is configured to indicate whether the charging gun lock is well connected, and the second confirmation message is configured to indicate the overload capacity of the charging line. That is, after the charging gun is well connected to the charging socket of the vehicle-mounted charger 1021 of the target vehicle end 102, if a circuit detecting the resistor in the charging gun is in the battery management system 1022 of the target vehicle end 102, the battery management system 1022 can determine the overload capacity of the charging line.

A low-voltage control switch S is in the AC charging pile end 101. When the charging gun is not connected normally, the switch S is directed to a low-voltage constant power. When the charging gun is connected normally, the switch S is switched to a charging capacity state output port, and the voltage is 9V. Optionally, after the switch S is switched to the charging capacity state output port, the AC charging pile end 101 can output a notification signal. After the battery management system 1022 receives the notification signal, the battery management system 1022 can process the battery cell. Optionally, after the battery management system 1022 receives the notification signal, the battery management system 1022 can also determine the driving capacity of the charging pile.

Optionally, after the charging socket of the vehicle-mounted charger 1021 of the target vehicle 102 is well connected to the charging gun, and the locking button of the charging gun is released after being locked, the AC charging pile end 101 can determine that the state of the button K on the charging gun is in a closed state. At this time, the AC charging pile end 101 can send a confirmation message of a charging connection state to the battery management system 1022 of the target vehicle end 102. Correspondingly, the battery management system 1022 of the target vehicle end 102 receives the confirmation message of the charging connection state. After the battery management system 1022 of the target vehicle end 102 receives the confirmation message of the charging connection state, the battery management system 1022 can reduce the permitted charging current, thereby avoiding disconnection of the charging gun under an excessive load, and ensuring the safety of the target vehicle.

In summary, according to the embodiment of the present disclosure, the battery management system can not only confirm the connection state of the charging gun, thereby ensuring the safety of the target vehicle, but also determine the overcurrent capacity of the charging pile (that is, determine the overload capacity of the charging line and determine the driving capacity of the charging pile), thereby ensuring the sufficiency of self-checking.

In order to facilitate understanding of the embodiments of the present disclosure, the vehicle-mounted charging control method provided by the present disclosure is described below. Optionally, the vehicle-mounted charging control method provided by the embodiment of the present disclosure may be executed by the electric vehicle, may be executed by the battery management system, and may be executed by the battery management system in the electric vehicle, and is not limited herein.

Referring to FIG. 2, FIG. 2 is a schematic flow diagram of a vehicle-mounted charging control method according to an embodiment of the present disclosure. As shown in FIG. 2, the vehicle-mounted charging control method can include but is not limited to the following steps:
S201. When the battery management system of the target vehicle is in the high-voltage power-on state, it is determined whether the charging socket of the vehicle-mounted charger of the target vehicle is connected to the DC charging pile;
The battery management system (BMS) is an important component of the power battery system of the electric vehicle. In one aspect, the battery management system detects, collects and preliminarily calculates real-time state parameters of the battery, and controls the on-off of a power supply loop according to a comparison relationship between a detected value and an allowable value; and in another aspect, the battery management system reports the collected key data to the vehicle control unit, and receives an instruction of the vehicle control unit, and works in coordination with other systems on the vehicle. The battery management system usually has a function of measuring the battery voltage, which can prevent or avoid abnormal conditions such as over-discharge, overcharge and over-temperature of the battery. In an optional embodiment, after the vehicle-mounted charger of the target vehicle is connected to the charging gun (that is, after the charging gun is inserted), the battery management system of the target vehicle is in the wake-up state. At this time, from the perspective of the target vehicle, the highest mode priority of the battery management system is the fast charging mode, followed by the slow charging mode, then the normal high-voltage power-on mode, and finally the external discharging mode. The external discharging mode is connected through a discharging gun, the discharging gun is built-in with a special CC connection resistor, and the difference in the CC connection resistor represents an external device with an external discharging requirement. The CC connection resistor is an internal resistor of the discharging gun, the discharging gun is connected to the circuit in the battery management system 1022 through the CC connection resistor, and after the CC connection resistor is matched with the circuit in the battery management system 1022 of the target vehicle end 102, the battery management system 1022 can obtain the confirmation message.

In an optional embodiment, the determining whether the charging socket of the vehicle-mounted charger of the target vehicle is connected to the DC charging pile includes: determining whether a CC2 signal is detected, wherein the CC2 signal is a connection signal from the DC charging pile (or referred to as the fast charging pile), and the CC2 signal is configured to indicate that the charging socket of the vehicle-mounted charger of the target vehicle is connected to a fast charging gun of the DC charging pile. That is, the battery management system determines whether the charging socket of the vehicle-mounted charger of the target vehicle is connected to the DC charging pile, that is, determines whether the CC2 signal in FIG. 1 is valid.

Optionally, after the CC2 resistor in the fast charging gun of the DC charging pile is correctly detected by the circuit in the battery management system of the target vehicle, it is determined that the charging socket of the vehicle-mounted charger of the target vehicle is connected to the DC charging pile.

In an optional embodiment, before step S201, when the battery management system of the target vehicle is in the low-voltage wake-up state, if a high-voltage power-on request from the vehicle control unit of the target vehicle is received, the battery management system of the target vehicle performs a pre-charging high-voltage power-on operation; after the pre-charging high-voltage power-on operation is completed, the high-voltage power-on is performed; if the high-voltage power-on is completed within a first preset time period, it is determined that the battery management system of the target vehicle is in the high-voltage power-on state.

In an optional embodiment, the method for determining that the battery management system of the target vehicle is in the high-voltage power-on state includes: when the battery management system of the target vehicle is in the wake-up state, a voltage of a high-voltage connection port in the battery management system of the target vehicle is acquired; if the difference between the voltage of the high-voltage connection port and the voltage of the battery pack of the target vehicle is less than a preset threshold, it is determined that the battery management system of the target vehicle is in the high-voltage power-on state. For example, assuming that the voltage of the battery pack of the target vehicle is 336 Volts (V) and the preset threshold is 5 V, if the voltage of the high-voltage connection port in the battery management system of the target vehicle is 334 V, it is determined that the battery management system of the target vehicle is in the high-voltage power-on state. For another example, assuming that the voltage of the battery pack of the target vehicle is 585 V and the preset threshold is 3 V, if the voltage of the high-voltage connection port in the battery management system of the target vehicle is 587 V, it is determined that the battery management system of the target vehicle is in the high-voltage power-on state.

S202. If the charging socket of the vehicle-mounted charger of the target vehicle is connected to the DC charging pile, the vehicle-mounted charger is controlled to enter a DC charging mode to fast charge the battery pack of the target vehicle.

Optionally, if the charging socket of the vehicle-mounted charger of the target vehicle is connected to the DC charging pile, that is, the charging socket of the vehicle-mounted charger of the target vehicle is connected to the fast charging gun, when the CC2 signal is valid, the battery management system can respond to the fast charging mode. That is, after determining that the charging socket of the vehicle-mounted charger of the target vehicle is connected to the fast charging gun, the battery management system of the target vehicle can determine the mode priority. If the CC2 signal is valid, the fast charging mode is responded, that is, the vehicle-mounted charger is controlled to enter the DC charging mode. If the CC2 signal is invalid, the fast charging mode is not responded.

In an optional embodiment, when the charging socket of the vehicle-mounted charger of the target vehicle is not connected to the DC charging pile, if it is determined that the charging socket of the vehicle-mounted charger of the target vehicle is connected to the charging gun of the AC charging pile within a second preset time period, the vehicle-mounted charger of the target vehicle is controlled to enter an AC charging mode.

In the embodiment, the second preset time period is 30 seconds.

In the embodiment, it is determined that the charging socket of the vehicle-mounted charger of the target vehicle is connected to the charging gun of the AC charging pile within the second preset time period, that is, it is determined that the CC signal in FIG. 1 is valid within the second preset time period.

As can be seen, according to the embodiment of the present disclosure, when the battery management system of the target vehicle is in the high-voltage power-on state and the charging socket of the vehicle-mounted charger is connected to the DC charging pile, without the battery management system entering the high-voltage power-off state, the battery management system of the target vehicle can control the vehicle-mounted charger to enter the DC charging mode, thereby improving the charging speed of the battery pack of the target vehicle.

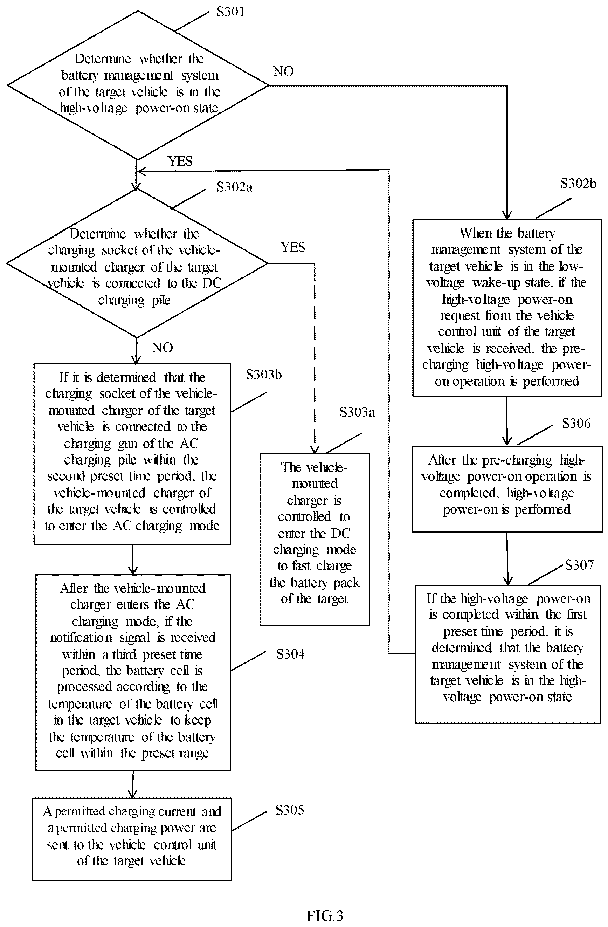

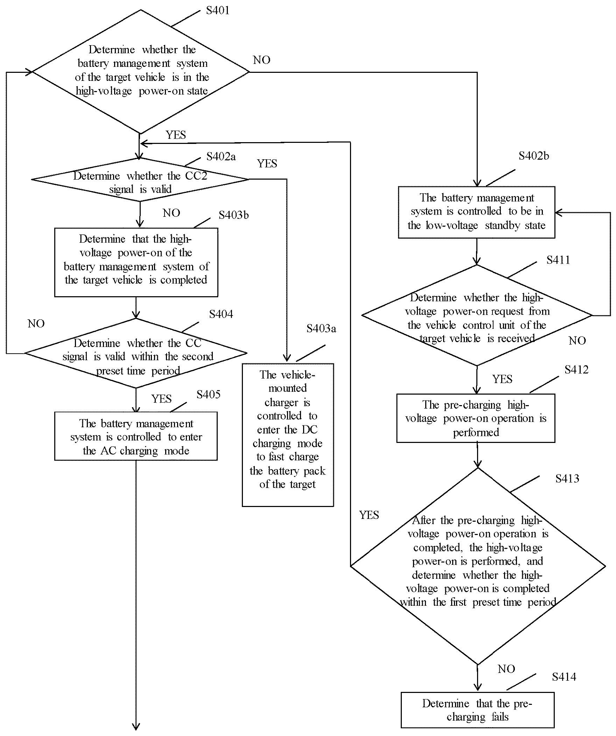

Referring to FIG. 3, FIG. 3 is a schematic flow diagram of another vehicle-mounted charging control method according to an embodiment of the present disclosure. The difference between the vehicle-mounted charging control method shown in FIG. 3 and the vehicle-mounted charging control method shown in FIG. 2 is that the vehicle-mounted charging control method shown in FIG. 3 further describes the charging control operation of the battery management system of the target vehicle when the vehicle-mounted charger of the target vehicle is not connected to the DC charging pile, and the handshake process between the battery management system and the charging pile when the battery management system of the target vehicle is not in the high-voltage power-on state. As shown in FIG. 3, the vehicle-mounted charging control method includes but is not limited to the following steps.

S301. Determine whether the battery management system of the target vehicle is in the high-voltage power-on state; if yes, step S302a is performed; if no, step S302b is performed.

In an optional embodiment, the determining whether the battery management system of the target vehicle is in the high-voltage power-on state can include: when the battery management system of the target vehicle is in the wake-up state, acquiring the voltage of the high-voltage connection port in the battery management system of the target vehicle; if the difference between the voltage of the high-voltage connection port and the voltage of the battery pack of the target vehicle is less than the preset threshold, determining that the battery management system of the target vehicle is in the high-voltage power-on state; if the difference between the voltage of the high-voltage connection port and the voltage of the battery pack of the target vehicle is greater than or equal to the preset threshold, determining that the battery management system of the target vehicle is not in the high-voltage power-on state.

In the embodiment, whether the battery management system of the target vehicle is in the wake-up state is determined by whether the vehicle-mounted charger of the target vehicle is connected to the charging gun (that is, whether the charging gun is inserted). Optionally, if the vehicle-mounted charger of the target vehicle is connected to the charging gun (that is, the charging gun is inserted), it is determined that the battery management system of the target vehicle is in the wake-up state.

S302a. Determine whether the charging socket of the vehicle-mounted charger of the target vehicle is connected to the DC charging pile; if yes, step S303a is performed; if no, step S303b is performed.

In an optional embodiment, the specific implementation of step S302a may refer to the related description in the foregoing step S201, and details are not described herein again.

S303a. The vehicle-mounted charger is controlled to enter the DC charging mode to fast charge the battery pack of the target vehicle.

S303b. If it is determined that the charging socket of the vehicle-mounted charger of the target vehicle is connected to the charging gun of the AC charging pile within the second preset time period, the vehicle-mounted charger of the target vehicle is controlled to enter the AC charging mode.

In an optional embodiment, if it is determined that the charging socket of the vehicle-mounted charger of the target vehicle is not connected to the charging gun of the AC charging pile within the second preset time period, step S301 is performed. That is, if the CC signal in FIG. 1 is invalid, the battery management system can perform step S301.

In an optional embodiment, after step S303b, the battery management system of the target vehicle further performs steps S304 and S305.

S304. After the vehicle-mounted charger enters the AC charging mode, if the notification signal is received within a third preset time period, the battery cell is processed according to the temperature of the battery cell in the target vehicle to keep the temperature of the battery cell within the preset range.

The notification signal is configured to indicate the processing of the battery cell. In addition, the preset range may be determined according to actual needs. In a specific embodiment, the preset range may also be a plurality of preset switchable ranges to ensure that the user may switch to different preset ranges in different situations.

Optionally, the notification signal can be sent by the vehicle-mounted charger of the target vehicle, and the notification signal can be a pulse width modulation (PWM) wave signal with a preset duty cycle. The PWM wave signal can be configured to indicate the driving capacity of the charging pile, that is, if the battery management system receives the PWM wave signal with the preset duty cycle, the driving capacity of the charging pile can be determined. Optionally, the driving capacity of the charging pile is, for example, the output power of the charging pile. After receiving the PWM signal, the battery management system can process the battery cell according to the temperature value of the battery cell stored in the battery management system of the target vehicle.

Optionally, the third preset time period can be 30 seconds, and the preset duty cycle can be 5% to 95%. That is, if the battery management system receives the PWM wave signal with the duty cycle of 5% to 95% within 30 seconds, it indicates that the CP signal in FIG. 1 is valid. At this time, the battery management system can process the battery cell according to the temperature of the battery cell in the target vehicle.

In an optional embodiment, the processing the battery cell according to the temperature of the battery cell in the target vehicle can include: if the maximum temperature of the battery cell in the target vehicle is greater than a preset first temperature and the minimum temperature of the battery cell is greater than or equal to a preset second temperature, performing a cooling process on the battery cell; if the maximum temperature of the battery cell in the target vehicle is less than or equal to the first temperature and the minimum temperature of the battery cell is less than the second temperature, performing a heating process on the battery cell. Optionally, the preset range can be a range between the second temperature and the first temperature, that is, the preset range is greater than or equal to the second temperature and less than or equal to the first temperature.

In an optional embodiment, if the maximum temperature of the battery cell in the target vehicle is greater than the first temperature and the minimum temperature is less than the second temperature, notification information is sent to the vehicle control unit, and the notification information is configured to indicate that the temperature difference of the battery cell is greater than a preset temperature difference value.

For example, assuming that the first temperature is 40 degrees Celsius (°C) and the second temperature is 0 °C, if the maximum temperature of the battery cell in the battery management system of the target vehicle is 45 °C and the minimum temperature is 5 °C within a certain time period, in this case, the cooling process is required for the battery cell. If the maximum temperature of the battery cell in the battery management system of the target vehicle is 35 °C and the minimum temperature is -5 °C within a certain time period, in this case, the heating process is required for the battery cell. If the maximum temperature of the battery cell in the battery management system of the target vehicle is 45 °C and the minimum temperature is -5 °C, and the preset temperature difference is 40 °C within a certain time period, in this case, because the temperature difference of the battery cell (45 °C-(-5 °C) = 50 °C) is greater than the preset temperature difference (40 °C), the battery management system needs to send the notification information to the vehicle control unit, and the notification information is configured to indicate that the temperature difference of the battery cell is too large.

That is, after the battery management system of the target vehicle completely enters the AC charging mode, the temperature of the battery cell should be determined. If the temperature difference of the battery cell is too large, the message of the excessive battery cell temperature difference fault can be reported to the vehicle control unit of the target vehicle; if the maximum temperature of the battery cell is too high, the cooling process of the battery cell is triggered; and if the minimum temperature of the battery cell is too low, the heating process of the battery cell is triggered.

In an optional embodiment, if the notification signal is not received within the third preset time period, it is determined that the handshake between the battery management system and the AC charging pile fails. That is, if the CP signal in FIG. 1 is invalid, it is determined that the handshake between the battery management system and the AC charging pile fails.

S305. A permitted charging current and a permitted charging power are sent to the vehicle control unit of the target vehicle.

That is, after the battery management system processes the battery cell according to the temperature value of the battery cell stored in the battery management system of the target vehicle, the permitted charging current and the permitted charging power can be sent to the vehicle control unit of the target vehicle according to the charging capacity that the battery cell can bear, and the vehicle control unit of the target vehicle receives the permitted charging current and the permitted charging power.

Optionally, the battery management system can also receive the energy required by the target vehicle reported by the vehicle control unit of the target vehicle according to the energy management strategy. Optionally, the energy required by the target vehicle is determined on the basis of the charging capacity of the battery cell, the energy consumed by the target vehicle for thermal management, and the energy consumed by the target vehicle at low voltage. In this way, energy management can be implemented from the perspective of the vehicle during the charging process, which facilitates the integration of the heating and charging functions.

S302b. when the battery management system of the target vehicle is in the low-voltage wake-up state, if the high-voltage power-on request from the vehicle control unit of the target vehicle is received, the pre-charging high-voltage power-on operation is performed;
After the battery management system 1022 receives a low level from the external device through the hardwire wake-up input port, the battery management system 1022 is in the low-voltage wake-up state.

The vehicle control unit (VCU) is a core controller of vehicle control, and through the controller area network (CAN) bus or the local interconnect network (LIN) bus or the hardwire, the control of the battery system, the electric drive system, the thermal management system, etc. is realized, which specifically includes the control of gears, an accelerator pedal and a brake pedal, the control of the calculation of the required output torque according to the real-time power of the power battery, and the control of the power-on and power-off of low voltage and high voltage of the vehicle, energy recovery, etc.

Optionally, the pre-charging high-voltage power-on operation means that the battery management system controls the pre-charging contactor to be closed; after it is determined that the voltage at the load end of the battery pack is greater than 95% of the battery pack (PACK) voltage, the positive contactor is controlled to be closed, and the pre-charging contactor is controlled to be opened.

In an optional embodiment, before performing the pre-charging high-voltage power-on operation, the battery management system of the target vehicle can determine whether an action fault prohibiting the battery management system from controlling the closing of the high-voltage contactor is present in the battery management system; and if the action fault prohibiting the battery management system from controlling the closing of the high-voltage contactor is not present, the pre-charging high-voltage power-on operation is performed.

Optionally, the action fault prohibiting the battery management system from controlling the closing of the high-voltage contactor can be a level-4 fault (for example, a high-voltage interlock fault) or a level-5 fault (for example, a battery pack thermal runaway fault or a collision fault). In the case of the level-4 fault, the battery management system does not need to immediately perform the high-voltage power-off, but only needs to perform the delayed high-voltage power-off. In the case of the level-5 fault, the battery management system needs to immediately perform the high-voltage power-off. It can be seen that the severity of level 4 faults is relatively low, while the severity of level 5 faults is relatively high.

That is, after receiving the high-voltage power-on request from the vehicle control unit of the target vehicle, the battery management system of the target vehicle can send a response message to the vehicle control unit of the target vehicle according to the fault level state, and the response message is configured to indicate whether the battery management system performs the pre-charging high-voltage power-on operation.

In an optional embodiment, when the battery management system of the target vehicle is in the low-voltage wake-up state, if the battery management system does not receive the high-voltage power-on request from the vehicle control unit of the target vehicle, the battery management system is controlled to enter a low-voltage power-on standby state.

The low-voltage power-on standby state is a standby state of the battery management system of the target vehicle in a low-voltage power-on state.

In an optional embodiment, after step S302b, the battery management system of the target vehicle further performs steps S306 and S307.

S306. After the pre-charging high-voltage power-on operation is completed, high-voltage power-on is performed.

S307. If the high-voltage power-on is completed within the first preset time period, it is determined that the battery management system of the target vehicle is in the high-voltage power-on state, and step S302a is performed.

Optionally, the first preset time period can be 1750 milliseconds (ms).

Optionally, that the high-voltage power-on is completed within the first preset time period may include: controlling the closing of the positive contactor and the negative contactor within the first preset time period.

In the embodiment of the present disclosure, the battery management system of the target vehicle can determine the state of the battery management system. When the battery management system is in the high-voltage power-on state and the charging socket of the vehicle-mounted charger is connected to the DC charging pile, the vehicle-mounted charger is controlled to enter the DC charging mode to fast charge the battery pack of the target vehicle. When the battery management system is in the high-voltage power-on state and the charging socket of the vehicle-mounted charger is not connected to the DC charging pile but connected to the AC charging pile, the vehicle-mounted charger is controlled to enter the AC charging mode. Therefore, the embodiment of the present disclosure not only improves the charging speed of the battery pack of the target vehicle, but also determines the state of the battery management system, compared to existing technologies that require the battery management system of the target vehicle to be in the high-voltage power-off state before charging the battery pack, thereby broadening the applicable scope. In addition, the embodiment of the application can better realize the handshake between the battery management system and the charging pile by redefining the control logic between the charging pile and the battery management system of the target vehicle.

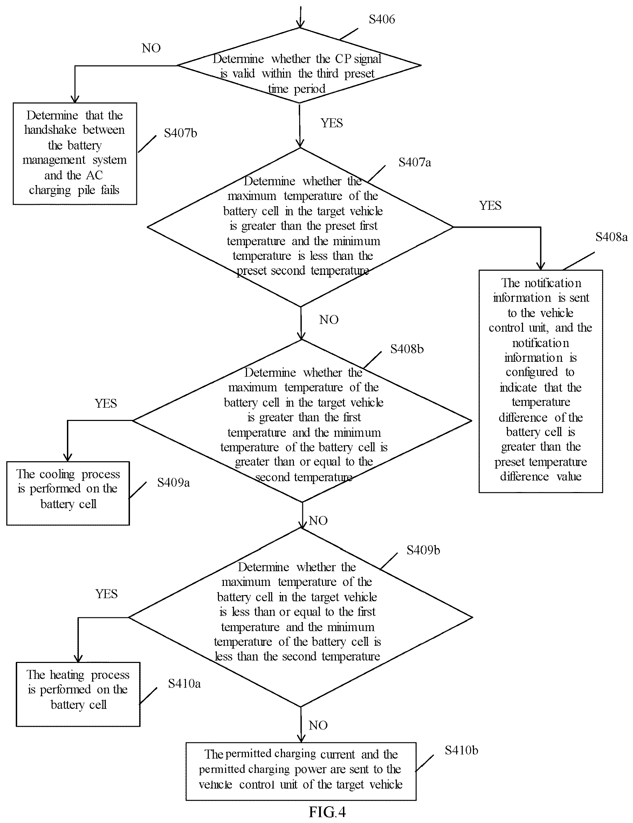

Referring to FIG. 4, FIG. 4 is a schematic flow diagram of another vehicle-mounted charging control method according to the embodiment of the present disclosure. The difference between the vehicle-mounted charging control method shown in FIG. 4 and the vehicle-mounted charging control method shown in FIG. 3 is that the vehicle-mounted charging control method shown in FIG. 4 further specifically describes how the battery management system of the target vehicle processes the battery cell according to the temperature value of the battery cell stored in the battery management system. As shown in FIG. 4, the vehicle-mounted charging control method can include but is not limited to the following steps.

S401. Determine whether the battery management system of the target vehicle is in the high-voltage power-on state; if yes, step S402a is performed; if no, step S402b is performed.

S402a. Determine whether the CC2 signal is valid; if yes, step S403a is performed; if no, step S403b is performed.

S403a. The vehicle-mounted charger is controlled to enter the DC charging mode to fast charge the battery pack of the target vehicle.

S403b. Determine that the high-voltage power-on of the battery management system of the target vehicle is completed.

In an optional embodiment, after step S403b, the battery management system of the target vehicle further performs steps S404 to S410b.

S404. Determine whether the CC signal is valid within the second preset time period; if yes, step S405 is performed; if no, step S401 is performed.

S405. The battery management system is controlled to enter the AC charging mode.

S406. Determine whether the CP signal is valid within the third preset time period; if yes, step S407a is performed; if no, step S407b is performed.

S407a. Determine whether the maximum temperature of the battery cell in the target vehicle is greater than the preset first temperature and the minimum temperature is less than the preset second temperature; if yes, step S408a is performed; if no, step S408b is performed.

S407b. Determine that the handshake between the battery management system and the AC charging pile fails.

S408a. The notification information is sent to the vehicle control unit, and the notification information is configured to indicate that the temperature difference of the battery cell is greater than the preset temperature difference value.

In an optional embodiment, after step S408a, the battery management system of the target vehicle can further control the battery management system to enter a level-2 fault state. Optionally, the level-2 fault can include but is not limited to slight overvoltage of battery cells, slight undervoltage of battery cells, slight overtemperature, slight undertemperature, the high-voltage interlock fault during driving, and the temperature balancing fault, etc. Optionally, under the level-2 fault, the damage degree of the battery pack is relatively low, and therefore, the charging of the battery pack may be continued with limited power in this case.

S408b. Determine whether the maximum temperature of the battery cell in the target vehicle is greater than the first temperature and the minimum temperature of the battery cell is greater than or equal to the second temperature; if yes, step S409a is performed; if no, step S409b is performed.

S409a. The cooling process is performed on the battery cell, and step S410b is performed.

S409b. Determine whether the maximum temperature of the battery cell in the target vehicle is less than or equal to the first temperature and the minimum temperature of the battery cell is less than the second temperature; if yes, step S410a is performed; if no, step S410b is performed.

S410a. The heating process is performed on the battery cell, and step S410b is performed.

S410b. The permitted charging current and the permitted charging power are sent to the vehicle control unit of the target vehicle.

S402b. The battery management system is controlled to be in the low-voltage standby state.

**In** an optional embodiment, after step S402b, the battery management system of the target vehicle further performs steps S411 to S414.

S411. Determine whether the high-voltage power-on request from the vehicle control unit of the target vehicle is received; if yes, step S412 is performed; if no, step S402b is performed.

S412. The pre-charging high-voltage power-on operation is performed.

S413. After the pre-charging high-voltage power-on operation is completed, the high-voltage power-on is performed, and determine whether the high-voltage power-on is completed within the first preset time period; if yes, step S402a is performed; if no, step S414 is performed.

S414. Determine that the pre-charging fails.

Optionally, in the embodiment of the present disclosure, the execution order of steps S407a, S408b, and S409b is not limited. In an embodiment, in step S406, determine whether the CP signal is valid in the third preset time period; if yes, step S408b is performed first; if no, step S407b is performed. S408b. Determine whether the maximum temperature of the battery cell in the target vehicle is greater than the first temperature and the minimum temperature of the battery cell is greater than or equal to the second temperature; if yes, step S409a is performed; if no, step S407a is performed. S407a. Determine whether the maximum temperature of the battery cell in the target vehicle is greater than the preset first temperature and the minimum temperature is less than the preset second temperature; if yes, step S408a is performed; if no, step S409b is performed. S409b. Determine whether the maximum temperature of the battery cell in the target vehicle is less than or equal to the first temperature and the minimum temperature of the battery cell is less than the second temperature; if yes, step S410a is performed; if no, step S410b is performed. Optionally, steps S407a, S408b, and S409b can be performed in the order of S409b, S407a, and S408b. Optionally, steps S407a, S408b, and S409b can be performed in the order of S408b, S407a, and S409b. Optionally, steps S407a, S408b, and S409b can be performed in the order of S408b, S409b, and S407a. Optionally, steps S407a, S408b, and S409b can be performed in the order of S409b, S408b, and S407a. Optionally, steps S407a, S408b, and S409b can be performed in the order of S407a, S409b, and S408b.

In an optional embodiment, after the battery management system of the target vehicle determines that the pre-charging fails, the battery management system can be controlled to enter the level 4 fault state. The level 4 fault is, for example, the high-voltage interlock fault.

In the embodiment of the present disclosure, when the battery management system of the target vehicle is in the high-voltage power-on state and the charging socket of the vehicle-mounted charger is connected to the DC charging pile, the vehicle-mounted charger is controlled to enter the DC charging mode to fast charge the battery pack of the target vehicle. When the battery management system is in the high-voltage power-on state and the charging socket of the vehicle-mounted charger is not connected to the DC charging pile but connected to the AC charging pile, the vehicle-mounted charger is controlled to enter the AC charging mode. As can be seen, the embodiment of the present disclosure can fully ensure the interaction between the battery management system of the target vehicle and the charging pile by redefining the control logic between the charging pile and the battery management system of the target vehicle, thereby better realizing the handshake between the target vehicle and the charging pile on the basis of ensuring that the target vehicle is completely safe and self-checked sufficiently, and facilitating the coordination of the two functions of battery heating and charging to the maximum extent.

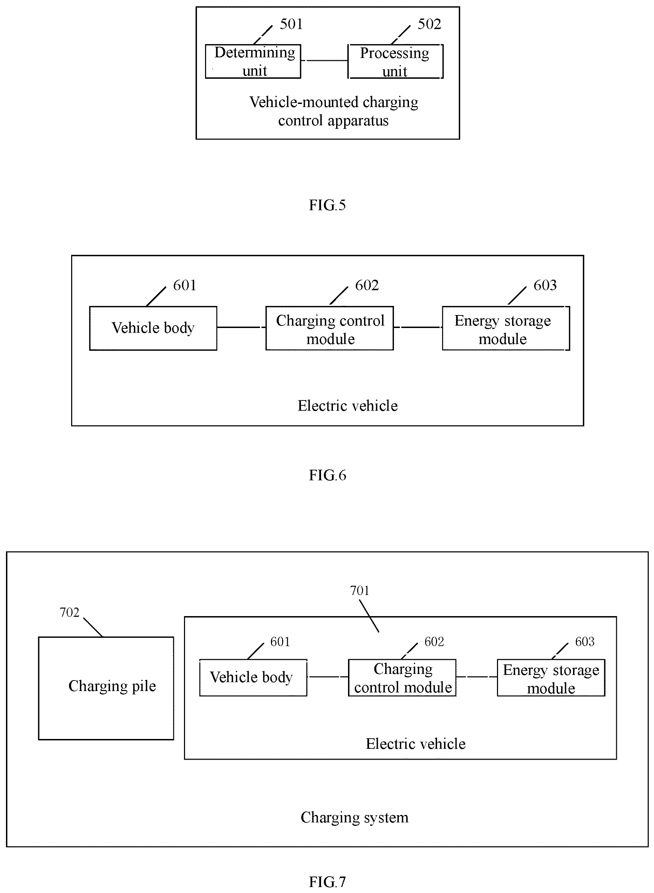

According to the description of the related embodiments of the vehicle-mounted charging control method, the embodiments of the present disclosure further provide a vehicle-mounted charging control apparatus, which can execute the vehicle-mounted charging control method shown in FIG. 2 or FIG. 3 or FIG. 4. Referring to FIG. 5, FIG. 5 is a schematic diagram of a vehicle-mounted charging control apparatus according to an embodiment of the present disclosure. As shown in FIG. 5, the vehicle-mounted charging control apparatus can include but is not limited to the following units.

A determining unit 501 is configured to determine whether the charging socket of the vehicle-mounted charger of the target vehicle is connected to the DC charging pile when the battery management system of the target vehicle is in the high-voltage power-on state; and
a processing unit 502 is configured to control the vehicle-mounted charger to enter the DC charging mode to fast charge the battery pack of the target vehicle if the charging socket of the vehicle-mounted charger of the target vehicle is connected to the DC charging pile.

**In** an optional embodiment, the processing unit 502 is further configured to:
when the battery management system of the target vehicle is in the low-voltage wake-up state, if the high-voltage power-on request from the vehicle control unit of the target vehicle is received, perform the pre-charging high-voltage power-on operation;
after the pre-charging high-voltage power-on operation is completed, perform the high-voltage power-on; and
if the high-voltage power-on is completed within the first preset time period, determine that the battery management system of the target vehicle is in the high-voltage power-on state.

In an optional embodiment, when determining that the battery management system of the target vehicle is in the high-voltage power-on state, the processing unit 502 is specifically configured to:
when the battery management system of the target vehicle is in the wake-up state, acquire the voltage of the high-voltage connection port in the battery management system of the target vehicle; and
if the difference between the voltage of the high-voltage connection port and the voltage of the battery pack of the target vehicle is less than the preset threshold, determine that the battery management system of the target vehicle is in the high-voltage power-on state.

In an optional embodiment, the processing unit 502 is further configured to:
When the charging socket of the vehicle-mounted charger of the target vehicle is not connected to the DC charging pile, if it is determined that the charging socket of the vehicle-mounted charger of the target vehicle is connected to the charging gun of the AC charging pile within the second preset time period, control the vehicle-mounted charger of the target vehicle to enter the AC charging mode;
after the vehicle-mounted charger enters the AC charging mode, if the notification signal is received within the third preset time period, process the battery cell according to the temperature of the battery cell in the target vehicle to keep the temperature of the battery cell within the preset range; the notification signal is configured to indicate the processing of the battery cell; and
send the permitted charging current and the permitted charging power to the vehicle control unit of the target vehicle.

In an optional embodiment, when processing the battery cell according to the temperature of the battery cell in the target vehicle, the processing unit 502 is specifically configured to:
if the maximum temperature of the battery cell in the target vehicle is greater than the first temperature and the minimum temperature of the battery cell is greater than or equal to the second temperature, perform the cooling process on the battery cell; and
if the maximum temperature of the battery cell in the target vehicle is less than or equal to the first temperature and the minimum temperature of the battery cell is less than the second temperature, perform the heating process on the battery cell.

In an optional embodiment, when processing the battery cell according to the temperature of the battery cell in the target vehicle, the processing unit 502 is specifically configured to:
if the maximum temperature of the battery cell in the target vehicle is greater than the first temperature and the minimum temperature is less than the second temperature, send the notification information to the vehicle control unit, and the notification information is configured to indicate that the temperature difference of the battery cell is greater than the preset temperature difference value.

In an optional embodiment, the vehicle-mounted charging control apparatus further includes the battery management system.

It can be understood that the specific implementation of each unit in the vehicle-mounted charging control apparatus and the beneficial effects that can be achieved may refer to the description of the embodiments of the vehicle-mounted charging control method, and will not be described herein again.

According to the description of the embodiments of the method and the apparatus, the embodiments of the present disclosure further provide an electric vehicle. Referring to FIG. 6, FIG. 6 is a schematic structural diagram of an electric vehicle according to an embodiment of the present disclosure. The electric vehicle includes a vehicle body 601, a charging control module 602 and an energy storage module 603. The energy storage module 603 is configured to provide electric energy for the electric vehicle body, and the charging control module 602 controls the charging and/or discharging of the energy storage module 603 by executing the foregoing method. Optionally, the charging control module 602 includes the battery management system.

In an optional embodiment, the charging control module 602 of the embodiment of the present disclosure can perform the following operations.

When the battery management system of the target vehicle is in the high-voltage power-on state, it is determined whether the charging socket of the vehicle-mounted charger of the target vehicle is connected to the DC charging pile; and
if the charging socket of the vehicle-mounted charger of the target vehicle is connected to the DC charging pile, the vehicle-mounted charger is controlled to enter the DC charging mode to fast charge the battery pack of the target vehicle.

In an optional embodiment, the charging control module 602 further performs the following operations.

When the battery management system of the target vehicle is in the low-voltage wake-up state, if the high-voltage power-on request from the vehicle control unit of the target vehicle is received, the pre-charging high-voltage power-on operation is performed;
After the pre-charging high-voltage power-on operation is completed, the high-voltage power-on is performed;
If the high-voltage power-on is completed within the first preset time period, it is determined that the battery management system of the target vehicle is in the high-voltage power-on state.

In an optional embodiment, when determining that the battery management system of the target vehicle is in the high-voltage power-on state, the charging control module 602 specifically performs the following operations.

When the battery management system of the target vehicle is in the wake-up state, the voltage of the high-voltage connection port in the battery management system of the target vehicle is acquired; and
if the difference between the voltage of the high-voltage connection port and the voltage of the battery pack of the target vehicle is less than the preset threshold, it is determined that the battery management system of the target vehicle is in the high-voltage power-on state.

In an optional embodiment, the charging control module 602 further performs the following operations.

When the charging socket of the vehicle-mounted charger of the target vehicle is not connected to the DC charging pile, if it is determined that the charging socket of the vehicle-mounted charger of the target vehicle is connected to the charging gun of the AC charging pile within the second preset time period, the vehicle-mounted charger of the target vehicle is controlled to enter the AC charging mode;
after the vehicle-mounted charger enters the AC charging mode, if the notification signal is received within the third preset time period, the battery cell is processed according to the temperature of the battery cell in the target vehicle to keep the temperature of the battery cell within the preset range; the notification signal is configured to indicate the processing of the battery cell; and
the permitted charging current and the permitted charging power are sent to the vehicle control unit of the target vehicle.

In an optional embodiment, when processing the battery cell according to the temperature of the battery cell in the target vehicle, the charging control module 602 specifically performs the following operations.

If the maximum temperature of the battery cell in the target vehicle is greater than the first temperature and the minimum temperature of the battery cell is greater than or equal to the second temperature, the cooling process is performed on the battery cell; and
if the maximum temperature of the battery cell in the target vehicle is less than or equal to the first temperature and the minimum temperature of the battery cell is less than the second temperature, the heating process is performed on the battery cell.

In an optional embodiment, the charging control module 602 further performs the following operation.

If the maximum temperature of the battery cell in the target vehicle is greater than the first temperature and the minimum temperature is less than the second temperature, the notification information is sent to the vehicle control unit, and the notification information is configured to indicate that the temperature difference of the battery cell is greater than the preset temperature difference value.

In a specific implementation, the charging control module 602 described in the embodiments of the present disclosure can perform the implementation manner described in the vehicle-mounted charging control method provided by the embodiments of the present disclosure, and can also perform the implementation manner described in the vehicle-mounted charging control apparatus provided by the embodiments of the present disclosure, and details are not described herein again.

The embodiments of the present disclosure further provide a charging system. Referring to FIG. 7, FIG. 7 is a schematic structural diagram of a charging system according to an embodiment of the present disclosure. The charging system includes an electric vehicle 701 and a charging pile 702, wherein the electric vehicle 701 is the electric vehicle provided by the foregoing embodiments. The electric vehicle obtains electric energy from the charging pile by executing the method provided by the foregoing embodiments.

The present disclosure further provides a computer readable storage medium, storing a computer program which, when executed by a processor, implements the steps in any of the foregoing method embodiments.

The embodiments of the present disclosure further provide a computer program product, including computer program code which, when running on a computer, causes the computer to execute the steps in any of the foregoing method embodiments.

The embodiments of the present disclosure further provide a chip, including a memory and a processor, the memory is configured to store a computer program, and the processor is configured to call and run the computer program from the memory, so that an apparatus installed with the chip executes the steps in any of the foregoing method embodiments.

The steps in the method of the embodiment of the present disclosure can be adjusted, combined and deleted in sequence according to actual needs.

The units in the apparatus of the embodiment of the present disclosure can be combined, divided and deleted according to actual needs.

In the present disclosure, for the same or similar term concepts, technical solutions and/or application scenario descriptions, only the first occurrence is generally described in detail, and the repeated occurrence is generally not repeated for brevity. When understanding the technical solutions and the like of the present disclosure, the same or similar term concepts, technical solutions and/or application scenario descriptions and the like which are not described in detail later can be referred to the related detailed description before.

In the present disclosure, the description of each embodiment has its own focus, and the part not described or recorded in a certain embodiment can be referred to the related description of other embodiments.

The technical features of the technical solutions of the present disclosure can be combined arbitrarily, and in order to make the description brief, all possible combinations of the technical features in the foregoing embodiments are not described, however, as long as the combinations of the technical features do not have contradiction, it should be considered that the combinations are within the scope of the present application.

A person skilled in the art can clearly understand that the foregoing embodiments can be implemented by means of software and a necessary universal hardware platform, and can also be implemented by hardware, but in many cases, the former is a preferred embodiment. Based on such understanding, the technical solutions of the present disclosure essentially or the parts that contribute to the prior art can be embodied in the form of a software product, and the computer software product is stored in a storage medium (such as a ROM/RAM, a magnetic disk, or an optical disc) and includes several instructions for making a terminal device (which can be a mobile phone, a computer, a server, a controlled terminal, or a network device) implement the method of each embodiment of the present disclosure.

In the embodiments, the method can be implemented by software, hardware, firmware or any combination thereof, in whole or in part. When the method is implemented by software, the method can be implemented in whole or in part in the form of a computer program product. The computer program product includes one or more computer instructions. When the computer program instructions are loaded and executed on a computer, the process or function according to the embodiments of the present disclosure is generated in whole or in part. The computer can be a general-purpose computer, a special-purpose computer, a computer network, or other programmable apparatus. The computer instructions can be stored in a computer-readable storage medium or transmitted from one computer-readable storage medium to another computer-readable storage medium, for example, the computer instructions can be transmitted from one website, computer, server or data center to another website, computer, server or data center through a wired (for example, coaxial cable, optical fiber, digital subscriber line) or wireless (for example, infrared, wireless, microwave, etc.) manner. The computer-readable storage medium can be any available medium that can be accessed by a computer or a data storage device (such as a server, a data center, etc.) integrated with one or more available media. The available medium can be a magnetic medium (for example, a floppy disk, a storage disk, a magnetic tape), an optical medium (for example, a DVD), or a semiconductor medium (for example, a Solid State Disk (SSD)), etc.

The above merely provides the preferred embodiments of the present disclosure and is not intended to limit the patent scope of the present disclosure. Any equivalent structure or equivalent process transformation or direct or indirect application in other related technical fields by using the content of the description and drawings of the present disclosure shall be included in the patent protection scope of the present disclosure.

## Claims

1. A vehicle-mounted charging control method, comprising:
when a battery management system (1022) of a target vehicle (102) is in a high-voltage power-on state, determining whether a charging socket of a vehicle-mounted charger (1021) of the target vehicle (102) is connected to a DC charging pile;
if the charging socket of the vehicle-mounted charger (1021) of the target vehicle (102) is connected to the DC charging pile, controlling the vehicle-mounted charger (1021) to enter a DC charging mode to fast charge a battery pack of the target vehicle (102).

2. The method according to claim 1, further comprising:
when the battery management system (1022) of the target vehicle (102) is in a low-voltage wake-up state, if a high-voltage power-on request from a vehicle control unit of the target vehicle (102) is received, performing a pre-charging high-voltage power-on operation;
after the pre-charging high-voltage power-on operation is completed, performing the high-voltage power-on;
if the high-voltage power-on is completed within a first preset time period, determining that the battery management system (1022) of the target vehicle (102) is in a high-voltage power-on state.

3. The method according to claim 2, wherein when the battery management system (1022) of the target vehicle (102) is in the low-voltage wake-up state, if the battery management system (1022) does not receive the high-voltage power-on request from the vehicle control unit of the target vehicle (102), controlling the battery management system (1022) to enter a low-voltage power-on standby state.

4. The method according to claim 2 or 3, before the battery management system (1022) of the target vehicle (102) performs the pre-charging high-voltage power-on operation, the method further comprising:
determining that an action fault prohibiting the battery management system (1022) from controlling the closing of the high-voltage contactor is not present in the battery management system (1022).

5. The method according to any one of claims 1 to 4, wherein method for determining that the battery management system (1022) of the target vehicle (102) is in the high-voltage power-on state comprises:
when the battery management system (1022) of the target vehicle (102) is in a wake-up state, acquiring a voltage of a high-voltage connection port in the battery management system (1022) of the target vehicle (102);
if a difference between the voltage of the high-voltage connection port and the voltage of the battery pack of the target vehicle (102) is less than a preset threshold, determining that the battery management system (1022) of the target vehicle (102) is in the high-voltage power-on state.

6. The method according to any one of claims 1 to 5, wherein determining whether the charging socket of the vehicle-mounted charger (1021) of the target vehicle (102) is connected to the DC charging pile comprises:
determining whether a CC2 signal is detected, wherein the CC2 signal is a connection signal from the DC charging pile, and the CC2 signal is configured to indicate that the charging socket of the vehicle-mounted charger (1021) of the target vehicle (102) is connected to a fast charging gun of the DC charging pile.

7. The method according to claim 1, further comprising:
when the charging socket of the vehicle-mounted charger (1021) of the target vehicle (102) is not connected to the DC charging pile, if it is determined that the charging socket of the vehicle-mounted charger (1021) of the target vehicle (102) is connected to a charging gun of an AC charging pile within a second preset time period (S404), controlling the vehicle-mounted charger (1021) of the target vehicle (102) to enter an AC charging mode.

8. The method according to claim 7, wherein the second preset time period is 30 seconds.

9. The method according to claim 7 or 8, further comprising:
after the vehicle-mounted charger (1021) enters the AC charging mode, if a notification signal is received within a third preset time period, processing a battery cell according to a temperature of the battery cell in the battery management system (1022) of the target vehicle (102) to keep the temperature of the battery cell within a preset range, the notification signal being configured to indicate the processing of the battery cell;
sending a permitted charging current and a permitted charging power to the vehicle control unit of the target vehicle (102).

10. The method according to claim 9, wherein the third preset time period is 30 seconds.

11. The method according to claim 9 or 10, wherein the notification signal comprises a pulse width modulation (PWM) wave signal with a preset duty cycle.

12. The method according to claim 11, wherein the preset duty cycle is in a range of 5% to 95%.

13. The method according to any one of claims 9 to 12, wherein processing the battery cell according to the temperature of the battery cell in the target vehicle (102) comprises:
if a maximum temperature of the battery cell in the target vehicle (102) is greater than a preset first temperature and a minimum temperature of the battery cell is greater than or equal to a preset second temperature, performing a cooling process on the battery cell;
if the maximum temperature of the battery cell in the target vehicle (102) is less than or equal to the first temperature and the minimum temperature of the battery cell is less than the second temperature, performing a heating process on the battery cell.

14. The method according to claim 13, wherein the preset range is greater than or equal to the second temperature and less than or equal to the first temperature.

15. The method according to claim 13 or 14, further comprising:
if the maximum temperature of the battery cell in the target vehicle (102) is greater than the first temperature and the minimum temperature is less than the second temperature, sending notification information to the vehicle control unit, and the notification information being configured to indicate that the temperature difference of the battery cell is greater than a preset temperature difference value.

16. A vehicle-mounted charging control apparatus, comprising:
a determining unit (501) configured to determine whether a charging socket of a vehicle-mounted charger (1021) of a target vehicle (102) is connected to a DC charging pile when a battery management system (1022) of the target vehicle (102) is in a high-voltage power-on state;
a processing unit (502) configured to control the vehicle-mounted charger (1021) to enter a DC charging mode to fast charge a battery pack of the target vehicle (102) if the charging socket of the vehicle-mounted charger (1021) of the target vehicle (102) is connected to the DC charging pile.

17. An electric vehicle (701), comprising:
a vehicle body (601);
a charging control module (602); and
an energy storage module (603) configured to provide electric energy for the electric vehicle body (601), the charging control module (602) controlling the charging and/or discharging of the energy storage module (603) by the method according to any one of claims 1 to 15.

18. A charging system, comprising an electric vehicle (701) and a charging pile (702), and the electric vehicle (701) obtaining electric energy from the charging pile (702) by the method according to any one of claims 1 to 15.

19. A computer-readable storage medium, storing a computer program which, when executed by a processor, implements the method according to any one of claims 1 to 15.
